# EUROPEAN PATENT APPLICATION

(11) **EP 2 309 176 A2**
(43) Date of publication of application: **13.04.2011**
(21) Application number: 10186936.0
(22) Date of filing: 08.10.2010
(51) Int. Cl.: F21V 14/08, F21S 8/12

(54) **Vehicle headlamp**

(30) Priority: 08.10.2009 JP 2009234530
(71) Applicant: Koito Manufacturing Co., Ltd., Tokyo 108-8711 (JP)
(72) Inventor: Mochizuki, Mitsuyuki, Shizuoka-shi, Shizuoka (JP)
(74) Representative: Intès, Didier Gérard André

(57) **Abstract**

A vehicle headlamp (10, 110, 210) is configured to form an additional light distribution pattern to be added to a tow beam light distribution pattern when forming a high beam light distribution pattern, and provided with an actuator (30) configured to move a first shade (28) between a shading position and a non-shading position.

## Description

### 1. Field

The present invention relates to a vehicle headlamp that is configured to form an additional light distribution pattern for high beam.

### 2. Description of the Related Art

In recent years, a vehicle headlamp, which is configured to change the shape of a light distribution pattern for high beam, which will be referred to as "high beam light distribution pattern," in accordance with a driving condition, has been proposed in order to increase opportunities to travel with a high beam.

For example, JP-A-2007-179969 (counterpart U.S. publication is: US 2007/0147055 A1) discloses a vehicle headlamp for forming a high beam additional light distribution pattern by a projector type lamp unit that uses a plurality of light emitting elements as a light source. The high beam additional light distribution pattern is a light distribution pattern additionally formed on a low beam light distribution pattern when a high beam light distribution pattern is to be formed.

The vehicle headlamp disclosed in JP-A-2007-179969 has a configuration in which a plurality of light emitting elements is disposed near a rear focal plane of a projection lens so as to be adjacent to each other in a horizontal direction. The vehicle headlamp forms a high beam additional light distribution pattern by the combination of light distribution patterns that are formed as inverted projection images of the respective light emitting elements.

In the vehicle headlamp disclosed in JP-A-2007-179969, a plurality of light distribution patterns is formed in parallel in the horizontal direction by irradiation light of the vehicle headlamp. Accordingly, if the turning-on/off of each of the light emitting elements is controlled so as not to form a light distribution pattern, which is to be formed at the position of an oncoming vehicle, along these light distribution patterns, it may be possible to increase visibility at the front region of a vehicle without directing glare at a driver of an oncoming vehicle or a preceding vehicle.

However, since each of these light distribution patterns is formed as an inverted projection image of a light emitting chip of each of the light emitting elements, it is difficult to clearly form the outline of the side end edge of the light distribution pattern. For this reason, if glare is not to be directed at a driver of an oncoming vehicle, there is a problem in that a light irradiation range on the front region of a vehicle is significantly limited.

### SUMMARY

One of objects of the present invention is to provide a vehicle headlamp that is configured to form a high beam additional light distribution pattern to increase visibility at the front region of a vehicle without directing glare at a driver of an oncoming vehicle.

According to an aspect of the invention, there is provided a vehicle headlamp that is configured to form an additional light distribution pattern to be added to a low beam light distribution pattern when forming a high beam light distribution pattern. The vehicle headlamp includes: a lamp unit; and a swivel mechanism that swivels the lamp unit in a horizontal direction. The lamp unit includes: a projection lens that is disposed on an optical axis extending in a longitudinal direction of a vehicle; a light source that is disposed on a rear side of a rear focal point of the projection lens; a reflector that reflects light emitted from the light source to a front side near the optical axis; and a shade that blocks a part of light reflected from the reflector near a rear focal plane of the projection lens. The shade is provided with a first shade including: a side end edge configured to form a vertical cutoff line on the additional light distribution pattern, the vertical cutoff line facing an opposite lane; and an upper end edge configured to form a horizontal cutoff line on the additional light distribution pattern, the horizontal cutoff line faces upward expending from a lower end position of the vertical cutoff line to the opposite lane. The lamp unit includes a first actuator configured to move the first between a shading position and a non-shading position. When the first shade is in the shading position, the side end edge of the first shade is disposed at a position separated from the optical axis toward a road shoulder so as to extend in a vertical direction, while the upper end edge of the first shade is disposed near a horizontal plane including the optical axis so as to extend in the horizontal direction. When the first shade is in the non-shading position, the first shade releases blocking of a light reflected by the reflector.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a front view of a vehicle headlamp according to an embodiment of the invention.
Fig. 2 is a cross-sectional view taken along a II-II line of Fig. 1.
Figs. 3A-3C are perspective views showing additional light distribution patterns, which are formed on a virtual vertical screen disposed at a position 25 m ahead of the lamp by light emitted forward from the vehicle headlamp, when vehicles and pedestrians keep to the left on a vehicle traveling road.
Fig. 4 is a front view of a vehicle headlamp according to a first modification of the embodiment.
Fig. 5 is a table showing several kinds of additional light distribution patterns that are formed according to a driving condition in the first modification.
Fig. 6 is a front view of a vehicle headlamp according to a second modification of the embodiment.
Figs. 7A-7C are perspective views showing additional light distribution patterns, which are formed on the virtual vertical screen by light emitted forward from the vehicle headlamp according to the second modification, when vehicles and pedestrians keep to the right on a vehicle traveling road.

### DETAILED DESCRIPTION OF THE EMBODIMENT(S)

Embodiments according to the present invention will be described in detail with reference to the accompanying drawings. The scope of the claimed invention should not be limited to the examples illustrated in the drawings and those described below.

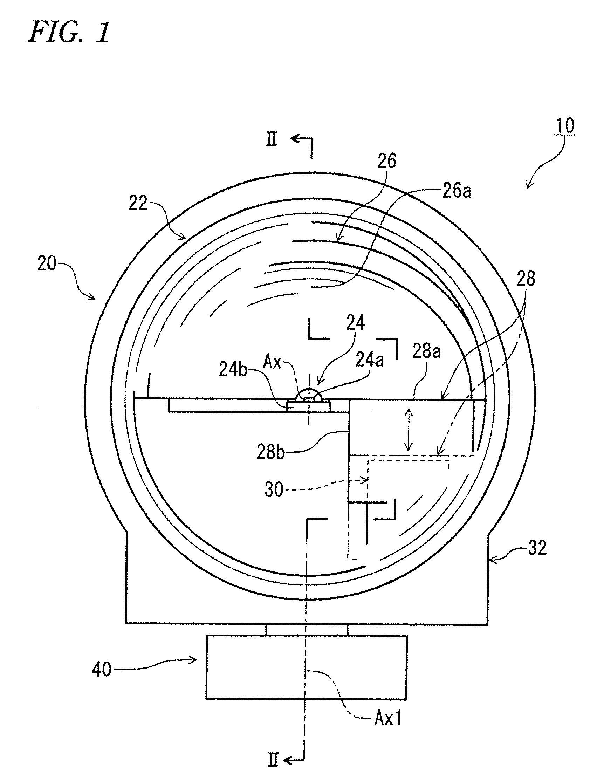

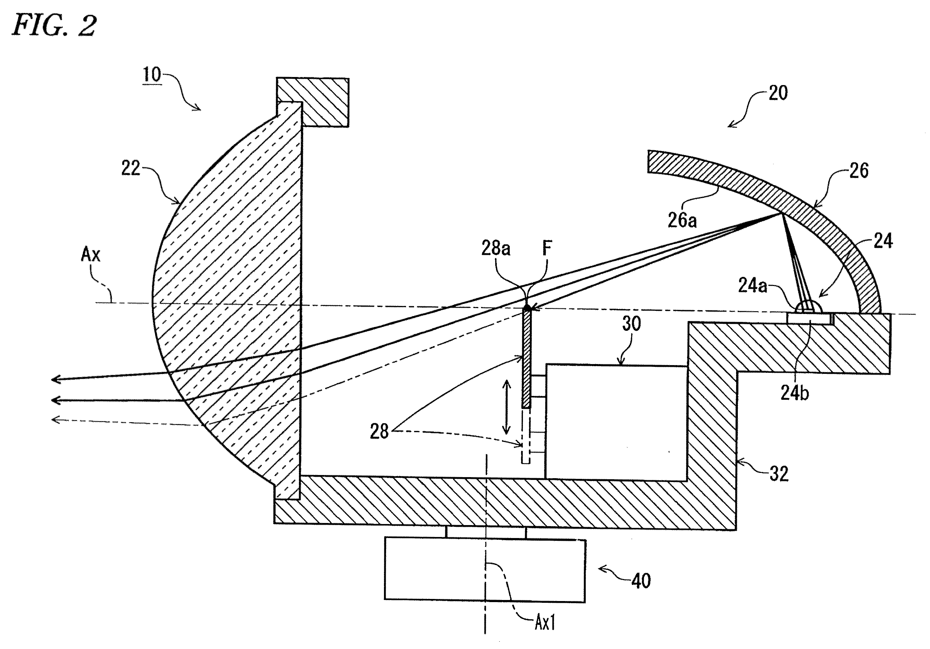

Fig. 1 is a front view of a vehicle headlamp 10 according to an embodiment of the invention. Further, Fig. 2 is a cross-sectional view taken along a II-II line of Fig. 1.

As shown in Figs. 1 and 2, the vehicle headlamp 10 according to this embodiment includes a projector type lamp unit 20 and a swivel mechanism 40 that swivels the lamp unit 20 in a horizontal direction. The vehicle headlamp is to be used while being assembled in a lamp body (not shown) or the like.

The lamp unit 20 includes a projection lens 22 that is disposed on an optical axis Ax extending in a longitudinal direction of a vehicle; a light emitting element 24 that is disposed on the rear side of a rear focal point F of the projection lens 22; a reflector 26 that reflects light, which is emitted from the light emitting element 24, to the projection lens 22 near the optical axis Ax; a first shade 28 that blocks a part of light reflected from the reflector 26; a first actuator 30 that moves the first shade 28 in a vertical direction; and a holder 32 that supports these.

The projection lens 22 is formed of a plano-convex aspheric lens of which the front surface is a convex surface and the rear surface is a flat surface, and is disposed on the optical axis Ax. Further, the projection lens 22 projects an image, which is formed on a focal plane including a rear focal point F of the projection lens, onto a virtual vertical screen, which is formed on the front side of the lamp, as an inverted image.

The light emitting element 24 is a white light-emitting diode, and includes a light emitting chip 24a as a light source that has a rectangular light emitting surface and is supported by a substrate 24b. The light emitting element is fixed to and supported by a holder 32 so that the light emitting surface of the light emitting chip 24a faces upward in a vertical direction.

The reflector 26 is disposed so as to cover the light emitting element 24 in a substantially semi-dome shape from above, and the lower end edge of the reflector is fixed to the holder 32.

The shape of the cross-section of a reflecting surface 26a of the reflector 26, which is taken along a plane including the optical axis Ax, is set to a substantially elliptical shape, and the eccentricity thereof is set to be gradually increased from a vertical cross-section toward a horizontal cross-section. Accordingly, light, which is emitted from the light emitting element 24 and reflected by the reflecting surface 26a, is substantially converged near the rear focal point F in the vertical cross-section, and the convergence position of the light is displaced to the front side of the rear focal point F in the horizontal cross-section.

The first shade 28 is a plate-like member that is disposed along a vertical plane perpendicular to the optical axis Ax, and has a side end edge 28b and an upper end edge 28a. The side end edge 28b extends in the vertical direction while facing the opposite lane (that is, the right side (the left side when viewing the lamp from the front side)). The upper end edge 28a extends in the horizontal direction. The first shade 28 is configured to be movable between a shading position (first shading position) shown by a solid line and a non-shading position (first non-shading position) shown by a two-dot chain line in Figs. 1 and 2.

When the first shade 28 is in the shading position, the side end edge 28b of the first shade is disposed at a position separated from the optical axis Ax to a road shoulder (that is, to the left side) so as to extend in the vertical direction and the upper end edge 28a of the first shade is disposed near a horizontal plane including the optical axis Ax so as to extend in the horizontal direction. Accordingly, the first shade blocks a part of light that is reflected from the reflector 26.

Meanwhile, when the first shade 28 is in the non-shading position, the upper end edge 28a of the first shade is disposed at a position separated from the horizontal plane, which includes the optical axis Ax, toward the lower side so as to extend in the horizontal direction. Accordingly, the first shade releases the blocking of the light reflected from the reflector 26. In other words, when the first shade 28 is in the non-shading position, the first shade 28 is retracted from the shading position to release the blocking of the light reflected by the reflector 26.

The first actuator 30 is formed of a solenoid that is fixed to and supported by the holder 32 on the rear side of the first shade 28 and below the optical axis Ax, and moves the first shade 28 between the shading position and the non-shading position. The first actuator 30 is actuated in accordance with the input of a drive signal from controller (not shown) or the manual operation of a switch.

The swivel mechanism 40 is formed of a stepping motor that is mounted on the lower end portion of the holder 32, and can swivel the lamp unit 20 in the horizontal direction about a vertical axis Ax 1 that passes through the optical axis Ax.

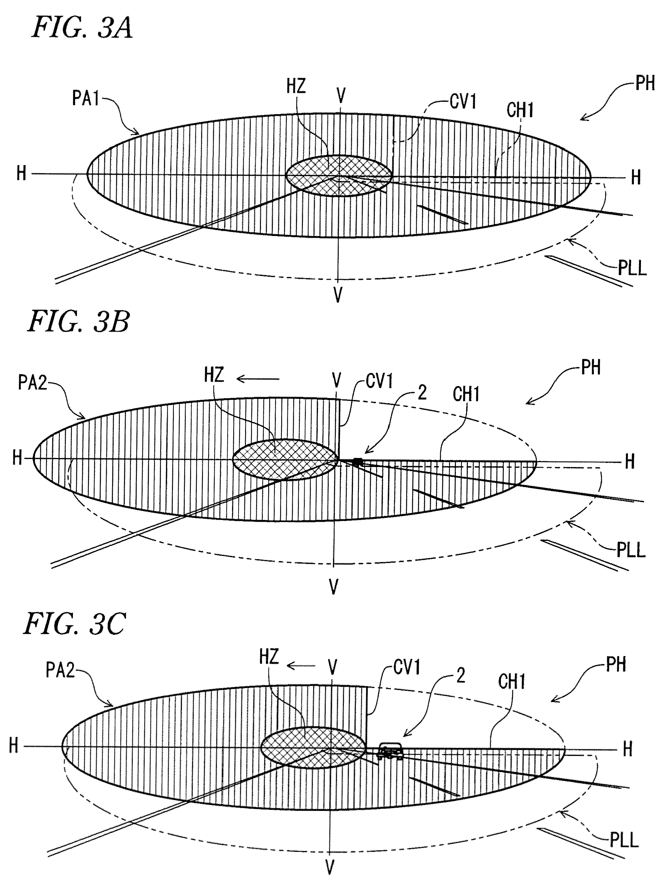

Figs. 3A-3C are perspective views showing additional light distribution patterns PA1 and PA2, which are formed on a virtual vertical screen disposed at a position 25 m ahead of the lamp by light emitted forward from the vehicle headlamp 10, when vehicles and pedestrians keep to the left on a vehicle traveling road (i.e. in a left-traffic system).

When a high beam light distribution pattern PH is formed, the respective additional light distribution patterns PA 1 and PA2 are additionally formed on a left low beam light distribution pattern PLL shown by a two-dot chain line in Fig. 3.

The additional light distribution pattern PA 1 shown in Fig. 3A is a light distribution pattern when the first shade 28 is in the non-shading position and the swivel mechanism 40 is not operated.

The additional light distribution pattern PA1 is formed as a light distribution pattern that extends to both left and right sides from a point H-V where the H-H line and V-V line intersect, which is a vanishing point on the front side of the lamp, so as to be elongated. A hot zone HZ, which is a region of the additional light distribution pattern PA1 having high luminosity, is formed to be horizontally long from the point H-V.

Each of the additional light distribution patterns PA2 shown in Figs. 3B and 3C is a light distribution pattern when the first shade 28 is in the shading position and the swivel mechanism 40 is operated.

The respective additional light distribution patterns PA2 are formed at positions displaced to the vicinity of the road shoulder when seen from the front side of the lamp. Further, each of these additional light distribution patterns PA2 has a shape that is obtained by cutting out an upper right portion (that is, a portion surrounded by an L-shaped two-dot chain line in Fig. 3A) of the additional light distribution pattern PA1. That is, each of the additional light distribution patterns PA2 has a vertical cutoff line CV1 that faces the opposite lane, and a horizontal cutoff line CH1 that faces upward and extends from the lower end position of the vertical cutoff line to the opposite lane.

The cut upper right portion of each of these additional light distribution patterns PA2 is formed by an inverted projection image of the first shade 28 that is in the shading position. In this case, the vertical cutoff line CV1 is formed by the side end edge 28b of the first shade 28, and the horizontal cutoff line CH 1 is formed by the upper end edge 28a of the first shade 28.

The vertical cutoff line CV1 has been formed on the additional light distribution pattern PA 1 shown in Fig. 3A at a position shown by a two-dot chain line. However, this position is set to a position where luminosity is 40 to 60% (for example, about 50%) of the maximum luminosity on the additional light distribution pattern PA1.

If the position of the vertical cutoff line CV1 is set as described above, the hot zone HZ is not removed from each additional light distribution pattern PA2 and is formed on the side of each additional light distribution pattern corresponding to the road shoulder as it is.

Fig. 3B shows that the additional light distribution pattern PA2 is formed at a position significantly displaced from the front side of the lamp to the road shoulder. In this case, the vertical cutoff line CV1 is positioned near a V-V line that is a vertical line passing through the point H-V, and the hot zone HZ is positioned near the side of the V-V line corresponding to the road shoulder.

If the additional light distribution pattern PA2 is formed at the above-mentioned position, glare is not directed at a driver of the oncoming vehicle 2 and visibility is sufficiently secured at the front region of the vehicle even when there is an oncoming vehicle 2 on the road surface in the distance on the front region of the vehicle.

Meanwhile, Fig. 3C shows that the additional light distribution pattern PA2 is formed at a position slightly displaced from the front side of the lamp to the road shoulder. In this case, the vertical cutoff line CV1 is in a position that is separated from the V-V line toward the opposite lane to some extent, and the hot zone HZ is in a position including the V-V line.

If the additional light distribution pattern PA2 is formed at the above-mentioned position, glare is not directed at a driver of an oncoming vehicle 2 when the oncoming vehicle 2 approaches the vehicle on the road surface in front of the vehicle and the center of the hot zone HZ is close to the point H-V, so that visibility is increased at the front region of the vehicle.

Meanwhile, a position where the additional light distribution pattern PA2 is formed may be set to an arbitrary position other than the positions shown in Figs. 3B and 3C by the operation of the swivel mechanism 40.

As described above, the vehicle headlamp 10 according to this embodiment has been configured to form the high beam additional light distribution patterns PA 1 and PA2 by the projector type lamp unit 20 including the shade. The vehicle headlamp includes the movable first shade 28 as the shade. The movable first shade 28 has the side end edge 28b that forms the vertical cutoff line CV1 facing the opposite lane, and the upper end edge 28a that forms the horizontal cutoff line CH1 facing upward. The position of the side end edge 28b is set to a position that is separated from the optical axis Ax toward the road shoulder, and the lamp unit 20 is configured to swivel in the horizontal direction by the swivel mechanism 40. Accordingly, it may be possible to obtain the following advantages.

That is, the first shade 28 is moved to the non-shading position, so that it may be possible to release the blocking of the reflected from the reflector 26 according to the first shade 28. Therefore, it may be possible to form the additional light distribution pattern PA I for forming a normal high beam light distribution pattern PH.

Accordingly, it may be possible to increase visibility at the front region of the vehicle to the maximum by forming the additional light distribution pattern PA1 under a driving condition where no oncoming vehicle 2 is present.

Meanwhile, it may be possible to form the additional light distribution pattern PA2, which has the vertical cutoff line CV1 facing the opposite lane and the horizontal cutoff line CH1 facing upward, by moving the first shade 28 to the shading position. In this case, since the side end edge 28b of the first shade 28 is in the position separated from the optical axis Ax toward the road shoulder, it may be possible to form the vertical cutoff line CV1 of the additional light distribution pattern PA2 at the position that is separated from the front side of the lamp toward the opposite lane. Accordingly, it may be possible to form the additional light distribution pattern PA2 in a shape that includes the maximum luminosity position of the additional light distribution pattern PA1.

Therefore, if the position of the additional light distribution pattern PA2 is displaced from the front side of the lamp to the road shoulder by the swivel mechanism 40 after the additional light distribution pattern PA2 is formed under a driving condition where the oncoming vehicle 2 is present, it may be possible to sufficiently secure visibility at the front region of the vehicle without directing glare at a driver of the oncoming vehicle 2.

As described above, according to this embodiment, it may be possible to increase visibility at the front region of a vehicle without directing glare at a driver of the oncoming vehicle 2, in the vehicle headlamp 10 that is configured to form the high beam additional light distribution patterns PA 1 and PA2.

In addition, in this embodiment, the lateral displacement of the side end edge 28b of the first shade 28 from the optical axis Ax, when the first shade is in the shading position, is set so that the vertical cutoff line CV1 facing the opposite lane is formed at a position where luminosity is 40 to 60% of the maximum luminosity on the additional light distribution pattern PA1. Accordingly, it may be possible to set the or the additional light distribution pattern PA2 to the shape that includes not only the maximum luminosity position of the additional light distribution pattern PA1 but also the hot zone HZ formed near the maximum luminosity position.

Modifications of the embodiment will be described below.

A first modification of the embodiment will be described first.

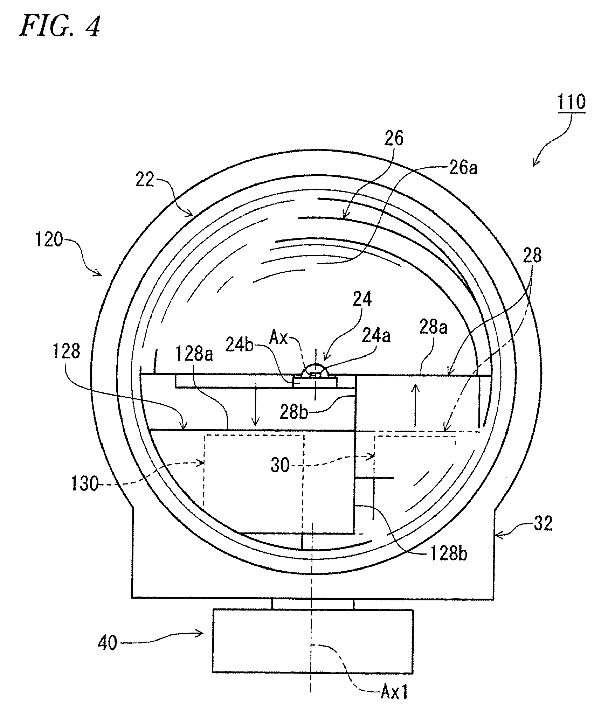

Fig. 4 is a front view of a vehicle headlamp 110 according to this modification.

As shown in Fig. 4, the basic configuration of the vehicle headlamp 110 is the same as that of the vehicle headlamp according to the above-mentioned embodiment. However, this modification is different from the above-mentioned embodiment in that the vehicle headlamp 110 includes a second shade 128 in addition to the first shade 28 as shades of a lamp unit 120 and includes a second actuator 130 for moving the second shade 128 in the vertical direction.

Like the first shade 28, the second shade 128 is a plate-like member that is disposed along the vertical plane perpendicular to an optical axis Ax, and has a side end edge 128b and an upper end edge 128a. The side end edge 128b extends in the vertical direction while facing the opposite lane. The upper end edge 128a extends in the horizontal direction. Likewise the first shade 28, the second shade 128 is configured to be movable between a shading position (second shading position) and a non-shading position (second non-shading position). Fig. 4 shows that the first shade 28 is in the shading position and the second shade 128 is in the non-shading position.

When the second shade 128 is in the shading position, the side end edge 128b of the second shade is disposed at substantially the same position as the position of the side end edge 28b of the first shade 28, when the first shade 28 is in the shading position, so as to extend in the vertical direction and the upper end edge 128a of the second shade is disposed near a horizontal plane including the optical axis Ax so as to extend in the horizontal direction. Accordingly, the second shade blocks a part of light that is reflected from the reflector 26.

Meanwhile, when the second shade 128 is in the non-shading position, the upper end edge 128a of the second shade is disposed at a position separated from the horizontal plane, which includes the optical axis Ax, to the lower side so as to extend in the horizontal direction. Accordingly, the second shade 128 releases the blocking of the light reflected from the reflector 26. In other words, when the second shade 128 is in the non-shading position, the second shade 128 is retracted from the shading position to release the blocking of the light reflected by the reflector.

The second actuator 130 is formed of a solenoid that is fixed to and supported by the holder 32 on the rear side of the second shade 128 and below the optical axis Ax, and moves the second shade 128 between the shading position and the non-shading position. The second actuator 130 is actuated in accordance with a drive signal input from controller (not shown) or the manual operation of a switch.

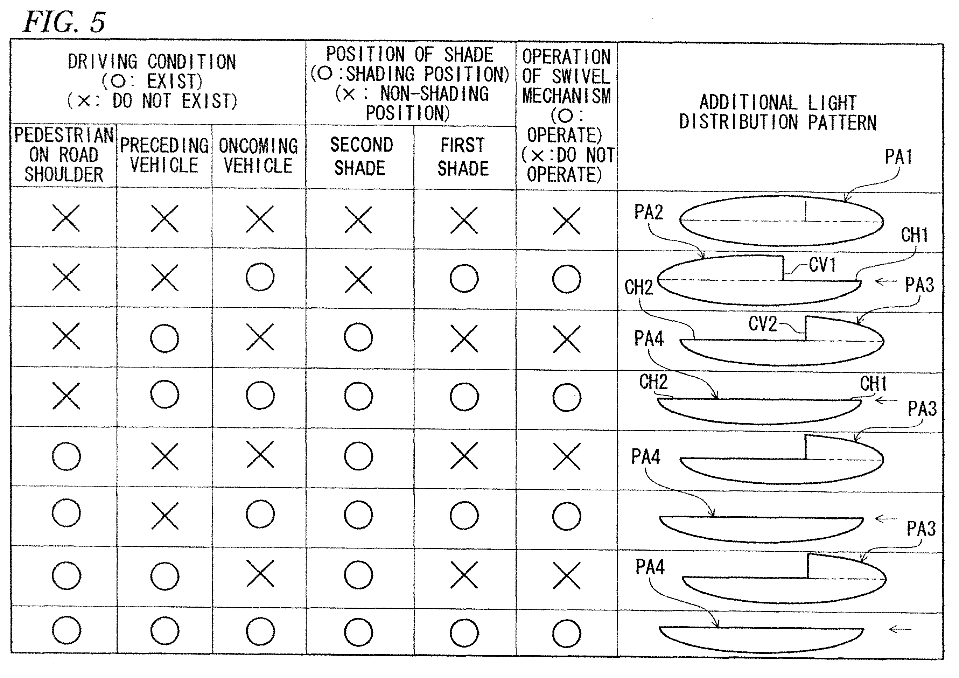

Further, in this modification, as shown in a table shown in Fig. 5, the first and second shades 28 and 128 are moved to the shading position or the non-shading position in accordance with a driving condition and the swivel mechanism 40 is appropriately operated, so that the vehicle headlamp selectively forms several kinds of additional light distribution patterns PA1 to PA4.

That is, if none of a pedestrian on the road shoulder, a preceding vehicle, or an oncoming vehicle are present, each of the first and second shades 28 and 128 is moved to the non-shading position and the swivel mechanism 40 is not operated, so that the additional light distribution pattern PA1 is formed on the front side of the lamp. This additional light distribution pattern PA1 is the same as the additional light distribution pattern PA 1 shown in Fig. 3A.

Further, if only an oncoming vehicle is present, only the second shade 128 is moved to the non-shading position and the swivel mechanism 40 is operated, so that the additional light distribution pattern PA2 is formed at a position displaced from the front side of the lamp to the vicinity of the road shoulder. This additional light distribution pattern PA2 is the same as the additional light distribution pattern PA2 shown in Figs. 3B and 3C.

Meanwhile, when only a preceding vehicle is present, or when only a pedestrian on the road shoulder is present, or when a preceding vehicle and a pedestrian on the road shoulder are present, only the first shade 28 is moved to the non-shading position and the swivel mechanism 40 is not operated, so that the additional light distribution pattern PA3 is on the front side of the lamp.

This additional light distribution pattern PA3 is formed in a shape that is obtained by cutting out an upper left portion and an upper middle portion from the additional light distribution pattern PA1. That is, this additional light distribution pattern PA3 has a vertical cutoff line CV2 that faces the road shoulder, and a horizontal cutoff line CH2 that faces upward and extends from the lower end position of the vertical cutoff line to the road shoulder.

The cut upper left portion and the cut upper middle portion of this additional light distribution pattern PA3 are formed by an inverted projection image of the second shade 128 that is in the shading position. In this case, the vertical cutoff line CV2 is formed by the side end edge 128b of the second shade 128, and the horizontal cutoff line CH2 is formed by the upper end edge 128a of the second shade 128.

Since the vertical cutoff line CV2 of this additional light distribution pattern PA3 is formed at substantially the same position as the position of the vertical cutoff line CV1 of the additional light distribution pattern PA2, it may be possible to increase visibility at a region, which corresponds to the opposite lane, of the front region of a vehicle without directing glare at a driver of a preceding vehicle or a pedestrian on the road shoulder.

Furthermore, when a preceding vehicle and an oncoming vehicle are present, or when a pedestrian on the road shoulder and an oncoming vehicle are present, or when all of a pedestrian on the road shoulder, a preceding vehicle, and an oncoming vehicle are present, the swivel mechanism 40 is operated while each of the first and second shades 28 and 128 is disposed in the shading position. Accordingly, the additional light distribution pattern PA4, which has the horizontal cutoff lines CH1 and CH2 at positions displaced from the front side of the lamp toward the vicinity of the road shoulder, is formed.

Moreover, the additional light distribution pattern PA4 is formed, so that it may be possible to increase visibility at the front region of a vehicle without directing glare at a pedestrian on the road shoulder or the drivers of preceding and oncoming vehicles.

According to this modification, one additional light distribution pattern is selected from four kinds of additional light distribution patterns PA1 to PA4 in accordance with a driving condition and is then displaced to the left or right side according to need, so that it may be possible to increase visibility at the front region of a vehicle without directing glare at a driver of an oncoming vehicle or a preceding vehicle and a pedestrian on the road shoulder.

Next, a second modification of the embodiment will be described.

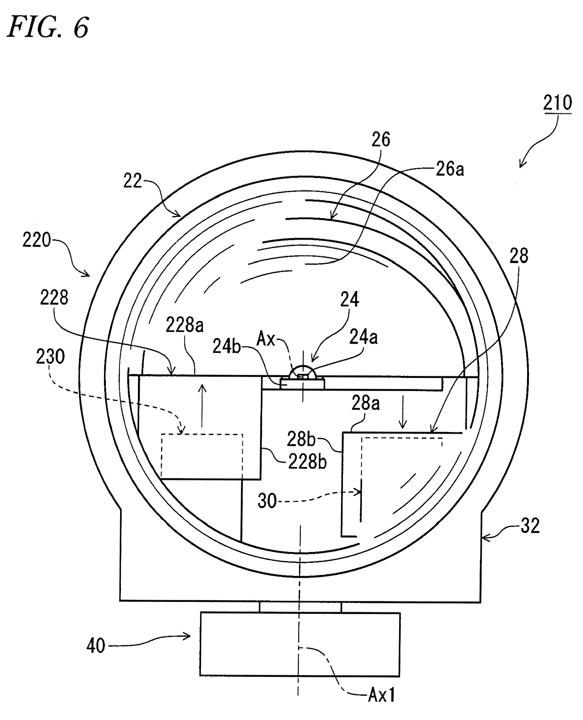

Fig. 6 is a front view of a vehicle headlamp 210 according to this modification.

As shown in Fig. 6, the basic configuration of the vehicle headlamp 210 is the same as that of the vehicle headlamp according to the first modification. However, the configuration of a second shade 228 of a lamp unit 220 of the vehicle headlamp 210 is different from that of the second shade 128 of the first modification.

That is, like the second shade 128 of the first modification, the second shade 228 of this modification has a side end edge 228b and an upper end edge 228a. The side end edge 228b extends in the vertical direction while facing the road shoulder. The upper end edge 228a extends in the horizontal direction. The second shade 228 is configured to be capable of moving between a shading position (third shading position) and a non-shading position (third shading position) by the operation of a second actuator 230 that moves the second shade 228 in the vertical direction. However, the second shade 228 is different from the second shade 128 of the first modification in that the side end edge 228b of the second shade is disposed at a position separated from the optical axis Ax toward the opposite lane so as to extend in the vertical direction when the second shade 228 is in the shading position.

In this case, when the second shade 228 is in the shading position, the side end edge 228b of the second shade is configured to be disposed at a position that is symmetrical about the optical axis Ax with the position of the side end edge 28b of the first shade 28 when the first shade 28 is in the shading position.

Meanwhile, when the second shade 228 is in the non-shading position, the upper end edge 228a of the second shade 228 is disposed at a position separated from the horizontal plane, which includes the optical axis Ax, to the lower side so as to extend in the horizontal direction. Accordingly, the second shade 228 releases the blocking of the light reflected from the reflector 26. In other words, when the second shade 228 is in the non-shading position, the second shade 228 is retracted from the shading position to release the blocking of the light reflected by the reflector.

Fig. 6 shows that the first shade 28 is in the non-shading position and the second shade 228 is in the shading position.

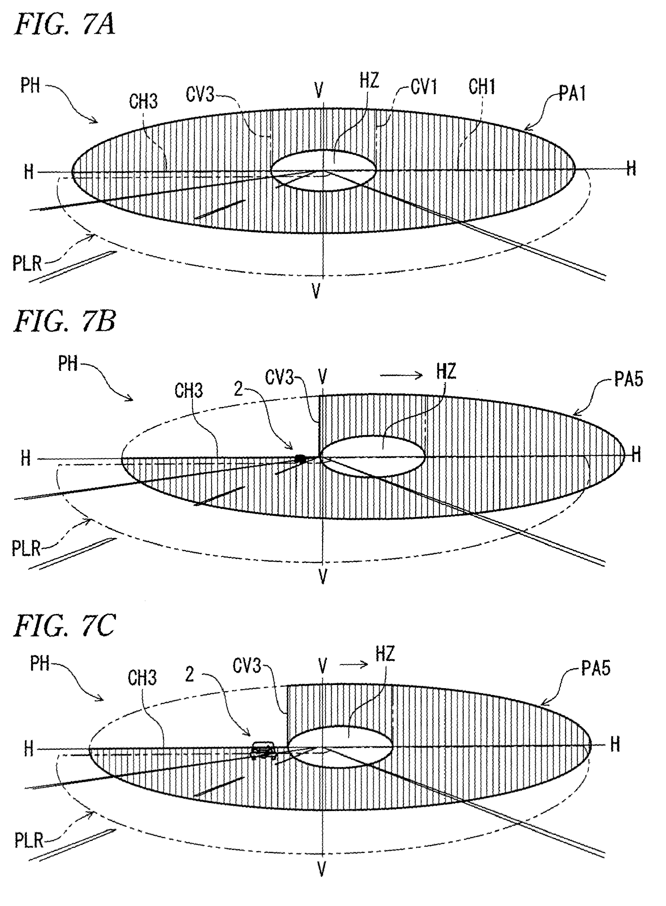

Figs. 7A-7C are perspective views showing additional light distribution patterns PA1 and PA5, which are formed on a virtual vertical screen by light emitted forward from the vehicle headlamp 210, when vehicles and pedestrians keep to the right on a vehicle traveling road.

When a high beam light distribution pattern PH is formed, the respective additional light distribution patterns PA1 and PA5 are additionally formed on a right low beam light distribution pattern PLR shown by a two-dot chain line in Figs. 7A-7C.

The additional light distribution pattern PA1 shown in Fig. 7A is the same as the additional light distribution pattern PA1 shown in Fig. 3A.

Each of the additional light distribution patterns PA5 shown in Figs. 7B and 7C has a shape that is obtained by cutting out an upper left portion (that is, a portion surrounded by a left L-shaped two-dot chain line in Fig. 7A) of the additional light distribution pattern PA1. That is, each of the additional light distribution patterns PA5 has a vertical cutoff line CV3 that faces the opposite lane (when vehicles and pedestrians keep to the right), and a horizontal cutoff line CH3 that faces upward and extends from the lower end position of the vertical cutoff line to the opposite lane.

The cut upper left portion of each of these additional light distribution patterns PA2 is formed by an inverted projection image of the second shade 228 that is in the shading position. In this case, the vertical cutoff line CV3 is formed by the side end edge 228b of the second shade 228, and the horizontal cutoff line CH3 is formed by the upper end edge 228a of the second shade 228.

Fig. 7B shows that the additional light distribution pattern PA5 is formed at a position significantly displaced from the front side of the lamp to the road shoulder. The vertical cutoff line CV3 is positioned near the V-V line, and a hot zone HZ is positioned near the side of the V-V line corresponding to the road shoulder.

If the additional light distribution pattern PA5 is formed at the above-mentioned position, glare is not directed at a driver of the oncoming vehicle 2 and visibility is sufficiently secured at the front region of the vehicle even when an oncoming vehicle 2 is present on the road surface in the distance on the front region of the vehicle.

Meanwhile, Fig. 7C shows that the additional light distribution pattern PA5 is formed at a position slightly displaced from the front side of the lamp to the road shoulder. In this case, the vertical cutoff line CV3 is in a position that is separated from the V-V line toward the opposite lane to some extent, and the hot zone HZ is in a position including the V-V line.

If the additional light distribution pattern PA5 is formed at the above-mentioned position, glare is not directed at a driver of an oncoming vehicle 2 when the oncoming vehicle 2 approaches the vehicle on the road surface in front of the vehicle and the center of the hot zone HZ is close to the point H-V, so that visibility is increased on the front region of the vehicle.

Meanwhile, a position where the additional light distribution pattern PA5 is formed may be set to an arbitrary position other than the positions shown in Figs. 3B and 3C by the operation of the swivel mechanism 40.

If the configuration of this modification is employed, it may be possible to perform light irradiation with an additional light distribution pattern corresponding to a traveling manner not only when vehicles and pedestrians keep to the left on a vehicle traveling road but also when a traveling manner is changed to the case where vehicles and pedestrians keep to the right on a vehicle traveling road (for example, when passing through the Straits of Dover).

A case where the light emitting chip 24a of the light emitting element 24 is used as a light source has been described in the embodiment and the respective modifications. However, even when a light emitting part of a discharge bulb, a filament of a halogen bulb, or the like is used as a light source, it may be possible to obtain the same advantages.

Meanwhile, numerical values, which have been described as specifications in the embodiment and the respective modifications, are merely illustrative and it goes without saying that these numerical values may be set to appropriate other values.

As described above with reference to the embodiments, there is provided a vehicle headlamp that is configured to form an additional light distribution pattern to be added to a low beam light distribution pattern when forming a high beam light distribution pattern. The vehicle headlamp includes: a lamp unit; and a swivel mechanism that swivels the lamp unit in a horizontal direction. The lamp unit includes: a projection lens that is disposed on an optical axis extending in a longitudinal direction of a vehicle; a light source that is disposed on a rear side of a rear focal point of the projection lens; a reflector that reflects light emitted from the light source to a front side near the optical axis; and a shade that blocks a part of light reflected from the reflector near a rear focal plane of the projection lens. The shade is provided with a first shade including: a side end edge configured to form a vertical cutoff line on the additional light distribution pattern, the vertical cutoff line facing an opposite lane; and an upper end edge configured to form a horizontal cutoff line on the additional light distribution pattern, the horizontal cutoff line faces upward and extending from a lower end position of the vertical cutoff line to the opposite lane. The lamp unit includes a first actuator configured to move the first shade between a shading position and a non-shading position. When the first shade is in the shading position, the side end edge of the first shade is disposed at a position separated from the optical axis toward a road shoulder so as to extend in a vertical direction, while the upper end edge of the first shade is disposed near a horizontal plane including the optical axis so as to extend in the horizontal direction. When the first shade is in the non-shading position, the first shade releases blocking of a light reflected by the reflector.

The side end may be formed to be arranged in a position displaced toward the road shoulder from the optical axis when the first shade is in the shading position. The amount of displacement from the optical axis may be arbitrary set according to the required design of the vehicle headlight.

The manner of the displacement or movement of the first shade between the shading position and the non-shading position and the mechanism therefore may not be limited to those described in the above. The specific position of the non-shading position may be arbitrary set according to the required design of the vehicle headlight.

As described in the above-mentioned configuration, the vehicle headlamp according to the invention has been configured to form a high beam additional light distribution pattern by a projector type lamp unit including a shade. However, the vehicle headlamp includes a movable first shade as the shade. The movable first shade has a side end edge that forms a vertical cutoff line that faces an opposite lane, and an upper end edge that forms a horizontal cutoff line that faces upward. The position of the side end edge of the first shade is set to a position separated from the optical axis toward a road shoulder, and the lamp unit is swiveled in the horizontal direction by the swivel mechanism. Accordingly, it may be possible to obtain the following advantages.

That is, the first shade is moved to the non-shading position, so that it may be possible to release the blocking of the light reflected from the reflector according to the first shade. Therefore, it may be possible to form a first additional light distribution pattern for forming a normal high beam light distribution pattern.

Accordingly, it may be possible to increase visibility at the front region of the vehicle to the maximum by forming the first additional light distribution pattern under a driving condition where no oncoming vehicle is present.

Meanwhile, it may be possible to form the second additional light distribution pattern, which has the vertical cutoff line facing the opposite lane and the horizontal cutoff line facing upward, by moving the first shade to the shading position. In this case, since the side end edge of the first shade is in a position separated from the optical axis toward the road shoulder, it may be possible to form the vertical cutoff line of the second additional light distribution pattern at the position that is separated from the front side of the lamp toward the opposite lane. Accordingly, it may be possible to form the second additional light distribution pattern in the shape that includes the maximum luminosity position of the first additional light distribution pattern.

Therefore, if the position of the second additional light distribution pattern is displaced from the front side of the lamp to the road shoulder by the swivel mechanism after the second additional light distribution pattern is formed under a driving condition where there is an oncoming vehicle, it may be possible to sufficiently secure visibility at the front region of the vehicle without directing glare at a driver of the oncoming vehicle.

As described above, according to the invention, it may be possible to increase visibility at the front region of a vehicle without directing glare at a driver of the oncoming vehicle, by means of the vehicle headlamp that is configured to form the high beam additional light distribution patterns.

In the above-mentioned configuration, a specific value of the lateral displacement of the side end edge of the first shade from the optical axis, when the first shade is in the shading position, is not particularly limited as described above. However, if the lateral displacement of the side end edge of the first shade is set so that the vertical cutoff line facing the opposite lane is formed at a position where luminosity is 40 to 60% of the maximum luminosity on the first additional light distribution pattern, it may be possible to set the shape of the second additional light distribution pattern to the shape that includes not only the maximum luminosity position of the first additional light distribution pattern but also the maximum luminosity region formed near the maximum luminosity position.

In the above-mentioned configuration, the shade is a second shade including a side end edge and an upper end edge, the side end edge forms a vertical cutoff line that faces the road shoulder on the first additional light distribution pattern, and the upper end edge forms a horizontal cutoff line that faces upward and extends from a lower end position of the vertical cutoff line to the road shoulder. The lamp unit is provided with a second actuator for moving the second shade between a shading position where the side end edge of the second shade is disposed at substantially the same position as the position of the side end edge of the first shade, when the first shade is in the shading position, so as to extend in the vertical direction and the upper end edge of the second shade is disposed near a horizontal plane including the optical axis so as to extend in the horizontal direction; and a non-shading position where the blocking of light reflected from the reflector according to the second shade is released. Accordingly, it may be possible to obtain the following advantages.

That is, it may be possible to form a third additional light distribution pattern, which has a vertical cutoff line facing the road shoulder and a horizontal cutoff line facing upward, by moving the second shade to the shading position and moving the first shade to the non-shading position.

In this case, since the vertical cutoff line facing the road shoulder is formed at substantially the same position of the position of the vertical cutoff line facing the opposite lane, it may be possible to increase visibility at a region, which corresponds to the opposite lane, of the front region of a vehicle without directing glare at a driver of a preceding vehicle or a pedestrian on a road shoulder.

In addition, it may be possible to form a fourth additional light distribution pattern, which has a horizontal cutoff line facing upward, by moving each of the first and second shades to the shading position.

Accordingly, one additional light distribution pattern is selected from the first to fourth additional light distribution patterns in accordance with a driving condition and is then displaced to the left or right side according to need, so that it may be possible to increase visibility at the front region of a vehicle without directing glare at a driver of an oncoming vehicle or a preceding vehicle and a pedestrian on the road shoulder.

Instead of this, if the side end edge of the second shade, when the second shade is moved to the shading position, is not disposed at substantially the same position as the position of the side end edge of the first shade, when the first shade is in the shading position, and disposed at a position separated from the optical axis toward the opposite lane so as to extend in the vertical direction, it may be possible to obtain the following advantages.

That is, even when a traveling manner on a vehicle traveling road is changed between a case where vehicles and pedestrians keep to the right (right-traffic) and a case where vehicles and pedestrians to the left (left-traffic), for example, when passing through the Straits of Dover, it may be possible to perform light irradiation with an additional light distribution pattern corresponding to the traveling manner.

Although the embodiments according to the present invention have been described above, the present invention is not limited to the above-mentioned embodiment but can be variously modified. Constituent components disclosed in the aforementioned embodiments may be combined suitably to form various modifications. For example, some of all constituent components disclosed in the embodiment may be removed or may be appropriately combined.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A vehicle headlamp that is configured to form an additional light distribution pattern to be added to a low beam light distribution pattern when forming a high beam light distribution pattern, the vehicle headlamp comprising:
a lamp unit (20, 120, 220); and
a swivel mechanism (40) that swivels the lamp unit in a horizontal direction,
wherein the lamp unit comprises:
a projection lens (22) that is disposed on an optical axis (Ax) extending in a longitudinal direction of a vehicle;
a light source (24) that is disposed on a rear side of a rear focal point (F) of the projection lens (22);
a reflector (26) that reflects light emitted from the light source (24) to a front side near the optical axis (Ax); and
a shade that blocks a part of light reflected from the reflector (26) near a rear focal plane of the projection lens (22),
wherein the shade comprises a first shade (28) comprising:
a side end edge (28b) configured to form a vertical cutoff line (CV1) on the additional light distribution pattern, the vertical cutoff line (CV1) facing an opposite lane; and
an upper end edge (28a) configured to form a horizontal cutoff line (CH1) on the additional light distribution pattern, the horizontal cutoff line (CH1) faces upward and extending from a lower end position of the vertical cutoff line (CV1) to the opposite lane,
wherein the lamp unit (20, 120. 220) comprises a first actuator (30) configured to move the first shade (28) between a shading position and a non-shading position,
wherein when the first shade (28) is in the shading position, the side end edge (28b) of the first (28) is disposed at a position from the optical axis (Ax) toward a shoulder so as to extend in a vertical direction, while the upper end edge (28a) of the first shade (28) is disposed near a horizontal plane including the optical axis (Ax) so as to extend in the horizontal direction, and
wherein when the first shade (28) is in the non-shading position, the first shade (28) releases blocking of a light reflected by the reflector (26).

2. The vehicle headlamp according to claim 1,
wherein when the first shade (28) is in the non-shading position, the first shade (28) is retracted from the shading position to release the blocking of the light reflected by the reflector (26).

3. The vehicle headlamp according to claim 1 or 2,
wherein when the first shade (28) is in the non-shading position, the upper end edge (28a) of the first shade (28) is disposed at a position separated from the horizontal plane including the optical axis (Ax) so as to extend in the horizontal direction.

4. The vehicle headlamp according to any one of claims 1 to 3,
wherein when the first shade (28) is in the shading position, the position of the side end edge (28b) of the first shade (28) is set so that the vertical cutoff line (CV1) is formed at a position where luminosity is 40 to 60% of the maximum luminosity on the additional light distribution pattern formed when the first shade (28) is in the non-shading position.

5. The vehicle headlamp according to any one of claims I to 4,
wherein the shade comprises a second shade (128) comprising:
a side end (128b) configured to form a vertical cutoff line (CV2) on the additional light distribution pattern, the vertical cutoff line (CV2) facing the road shoulder; and
an upper end edge (128a) configured to form a horizontal cutoff line (CH2) on the additional distribution pattern, the horizontal cutoff line (CH2) facing upward and extending from a lower end position of the vertical cutoff line (CV2) to the road shoulder,
wherein the lamp unit (120) comprises a second actuator (130) configured to move the second shade (128) between a shading position and a non-shading position,
wherein when the second shade (128) is in the shading position, the side end edge (128b) of the second shade (128) is disposed at substantially the same position as the position of the side end edge (28b) of the first shade (28) when the first shade (28) is in the shading position, so as to extend in the vertical direction and the upper end edge (128a) of the second shade (128) is disposed near a horizontal plane including the optical axis so as to extend in the horizontal direction, and
wherein when the second shade (128) is in the non-shading position, the second shade (128) releases blocking of the light reflected from the reflector (26).

6. The vehicle headlamp according to claim 5,
wherein when the second shade (128) is in the non-shading position, the second shade (128) is retracted from the shading position to release the blocking of the light reflected by the reflector (26).

7. The vehicle headlamp according to claim 5 or 6,
wherein when the second shade (128) is in the non-shading position, the upper end edge (128a) of the second shade (128) is disposed at a position separated from the horizontal plane including the optical axis (Ax) to the lower side so as to extend in the horizontal direction.

8. The vehicle headlamp according to any one of claims I to 4,
wherein the shade comprises a second shade (228) comprising:
a side end edge (1228b) configured to form a vertical cutoff line (CV3) on the additional light distribution pattern, the vertical cutoff line (CV3) facing the road shoulder; and
an upper end edge (228a) configured to form a horizontal cutoff line (CH3) on the additional light distribution pattern, the horizontal cutoff line (CH3) facing upward and extending from a lower end position of the vertical cutoff line (CV3) to the road shoulder,
wherein the lamp unit (220) comprises a second actuator (230) configured to move the second shade (228) between a shading position and a non-shading position,
wherein when the second shade (228) is in the shading position, the side end edge (228b) of the second shade (228) is disposed at a position separated from the optical axis (Ax) toward the opposite lane so as to extend in the vertical direction, and the upper end edge (228a) of the second shade (228) is disposed near a horizontal plane including the optical axis (Ax) so as to extend in the horizontal direction, and
wherein when the second shade (228) is in the non-shading position, the second shade (228) releases blocking of the light reflected from the reflector (26).

9. The vehicle headlamp according to claim 8,
wherein when the second shade (228) is in the non-shading position, the second shade (228) is retracted from the shading position to release the blocking of the light reflected by the reflector (26).

10. The vehicle headlamp according to claim 8 or 9,
wherein when the second shade (228) is in the non-shading position, the upper end edge (228a) of the second shade (228) is disposed at a position separated from the horizontal plane including the optical axis (Ax) to the lower side so as to extend in the horizontal direction.
